# FASCICULE DE BREVET EUROPEEN

(11) **EP 0 546 974 B1**
(45) Date de publication et mention de la délivrance du brevet: **20.03.1996**
(21) Numéro de dépôt: 92460030.7
(22) Date de dépôt: 16.10.1992
(51) Int. Cl.: A01C 5/06, A01C 23/02

(54) **Enfouisseur de produits liquides**
Flüssigdüngereinbringer
Liquid manure subsoil applicator

(30) Priorité: 09.12.1991 FR 9115403
(43) Date de publication de la demande: 16.06.1993
(73) Titulaire: ETABLISSEMENTS MAUGUIN SA, F-53006 Laval Cedex (FR)
(72) Inventeur: Mauguin, Jean, F-53260 Entrammes (FR); Desbois, Gabriel, F-56140 Malestroit (FR)
(74) Mandataire: Le Guen, Louis François

(56) Documents cités:
- EP-A- 0 322 941
- EP-A- 0 438 187
- DE-A- 2 655 647
- FR-A- 1 018 290
- US-A- 1 821 829
- US-A- 2 489 385
- US-A- 3 799 079

## Description

La présente invention concerne un enfouisseur de produits liquides selon le préambule de la revendication 1. Un tel enfouisseur est connu du document DE-A-2 655 647.

On connaît déjà des enfouisseurs composés de plusieurs dispositifs d'enfouissage et on se reportera, par exemple, au document de brevet EP-A-322 941.

Un enfouisseur de produits liquides se fixe à l'arrière d'une tonne contenant le liquide à enfouir. Chaque dispositif d'enfouissage est généralement composé, montés sur un même châssis, de moyens d'ouverture d'un sillon à la surface du sol, de moyens pour injecter le liquide à enfouir dans le sillon ouvert par lesdits moyens de formation et de moyens de rebouchage dudit sillon. Généralement, les moyens d'ouverture d'un sillon sont constitués de deux disques ouverts en "V" et les moyens d'injection d'un coutre relié à la tonne pour y être alimenté en liquide à enfouir.

Les enfouisseurs connus présentent l'inconvénient que les disques ouverts en "V" et les coutres exercent une résistance à l'avancement, ce qui se traduit par un double effet. D'une part, cette résistance constitue un élément consommateur de puissance de traction et, d'autre part, elle est le siège d'une force qui tend à abaisser l'arrière de la tonne et, par conséquent, à délester la roue arrière du véhicule qui tire la tonne. Il s'ensuit une perte d'adhérence de ce véhicule.

Par ailleurs, les enfouisseurs à disques ouverts en "V" ont nécessairement un espacement entre les dispositifs d'enfouissage qui est trop important car supérieur à une distance idéale pour les plantes qui absorbent les éléments apportés par le produit liquide. En effet, lorsque la distance entre les dispositifs d'enfouissage est trop importante, l'engrais liquide est enfoui selon des bandes parallèles à la direction d'avancement de l'enfouissement. Il en résulte une pousse non-uniforme des plantes qui est alors dite en vague.

Enfin, un dispositif tel que celui qui vient d'être décrit ne fonctionne que sur des terrains relativement mous, par exemple des prairies ou des terres labourées.

Le but de l'invention est de prévoir un dispositif d'enfouissage qui ne présente pas les inconvénients mentionnés ci-dessus.

Ainsi, il est de prévoir un enfouisseur qui, d'une part, est tel qu'en fonctionnement, il exerce une plus faible résistance de traction que celle des enfouisseurs de l'art antérieur, et qui d'autre part, exerce indirectement une force d'appui sur les roues arrière du véhicule qui tire la tonne et l'enfouisseur. Par ailleurs, un tel enfouisseur est tel que les dispositifs d'enfouissage qui le composent sont à relativement plus faible distance que celle des enfouisseurs de l'art antérieur, et est prévu pour tout terrain.

Ce but est atteint par la mise en oeuvre de la combinaison des moyens qui sont définis dans la revendication 1. Des caractéristiques préférentielles sont indiquées dans les revendications dépendantes.

Ces caractéristiques, ainsi que d'autres, apparaîtront plus clairement à la lecture de la description suivante de deux exemples de réalisation, ladite description étant faite en relation avec les dessins joints, parmi lesquels:
les Figs. 1a et 1b sont respectivement des vues de face et de dessus d'un dispositif d'enfouissage d'un enfouisseur qui ne concerne pas un mode de réalisation de l'invention,
les Figs. 2a à 2d sont des vues de face montrant des modes de réalisation du disque constituant les moyens de formation d'un sillon d'un dispositif d'enfouissage selon l'invention,
la Fig. 3 est une vue de face montrant les échancrures que présente un disque d'un dispositif d'enfouissage selon l'invention,
la Fig. 4 montre le profil d'un sillon formé par un disque d'un dispositif d'enfouissage selon l'invention,
la Fig. 5 est une vue de face d'un dispositif d'enfouissage d'un enfouisseur selon un mode de réalisation de l'invention,
la Fig. 6 est une vue de dessus d'un soc qui peut équiper un dispositif d'enfouissage selon le second mode de réalisation, et
la Fig. 7 montre un profil d'un sillon formé par un disque et un soc d'un dispositif d'enfouissage selon le second mode de réalisation de l'invention.

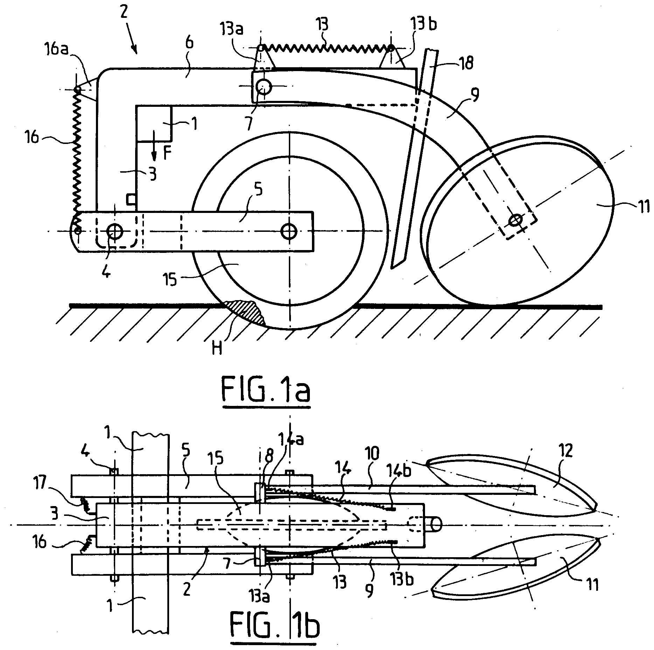

Le dispositif d'enfouissage représenté à la Fig. 1 est porté par une poutre transversale 1 fixée à un système de fixation de type trois points à l'arrière d'une tonne contenant le liquide à enfouir. Cette poutre 1 porte en réalité un certain nombre de dispositifs d'enfouissage disposés côte à côte et identiques à celui décrit ici formant ensemble un enfouisseur. Ce nombre peut être compris entre 4 et 12. Le système de fixation à la tonne est également prévu pour pouvoir exercer, à l'aide de vérins hydrauliques appropriés, une force verticale descendante (flèche F) sur la poutre 1 et, par conséquent, sur chaque dispositif d'enfouissage.

Chaque dispositif d'enfouissage est essentiellement constitué d'un châssis 2 en forme d'équerre fixé sur la poutre 1 et pourvu, à l'extrémité inférieure de son aile verticale 3, d'un axe de pivotement 4 autour duquel pivote un bras 5. Sur l'aile supérieure horizontale 6, sont prévus des seconds axes de pivotement 7 et 8 autour desquels, symétriquement par rapport à l'axe longitudinal du châssis 2 et de chaque côté de ce châssis 2, pivotent respectivement deux bras 9 et 10 indépendants l'un de l'autre.

Chaque bras 9, 10 est pourvu, à son extrémité inférieure, d'une roue de rebouchage 11, 12 inclinée par rapport à la verticale et inclinée par rapport à l'axe longitudinal du dispositif d'enfouissage. Les inclinaisons par rapport à la verticale et par rapport à l'axe longitudinal sont, par exemple, comprises entre 10 et 30°. Les roues de rebouchage 11 et 12 forment, vues de dessus, un "V" ouvert vers l'avant du dispositif et, vues de derrière, un "V" ouvert vers le haut.

Les roues de rebouchage 11 et 12 sont prévues pour pouvoir rouler sur le sol. Chaque bras 9, 10 est pourvu d'un système de rappel 13, 14 qui tend à pousser la roue correspondante 11, 12 contre le sol. Ce système est par exemple constitué d'un ressort de rappel dont une extrémité est fixée à une patte solidaire 13a, 14a du bras 9, 10 correspondant et l'autre extrémité est fixée sur une patte 13b, 14b solidaire de l'aile horizontale 6 du châssis 2.

A l'extrémité libre du bras 5, sont prévus, dans un plan vertical contenant l'axe longitudinal du dispositif d'enfouissage, des moyens d'ouverture d'un sillon constitués d'un disque 15 décrit en détail ci-après. Un système de rappel 16, 17 par exemple constitué d'un ressort de rappel (ou de deux ressorts de rappel 16 et 17) dont une extrémité est fixée à une extrémité du bras 5 et l'autre extrémité à une patte 16a solidaire du châssis 2, est destiné à jouer le rôle d'amortisseur pour le disque 15.

A l'arrière du disque 15 est prévu un tuyau d'injection 18 relié à une tonne (non représentée) contenant le liquide à enfouir. L'extrémité inférieure du tuyau d'injection 18 se trouve dans l'axe longitudinal du dispositif d'enfouissage, à l'arrière du disque 15.

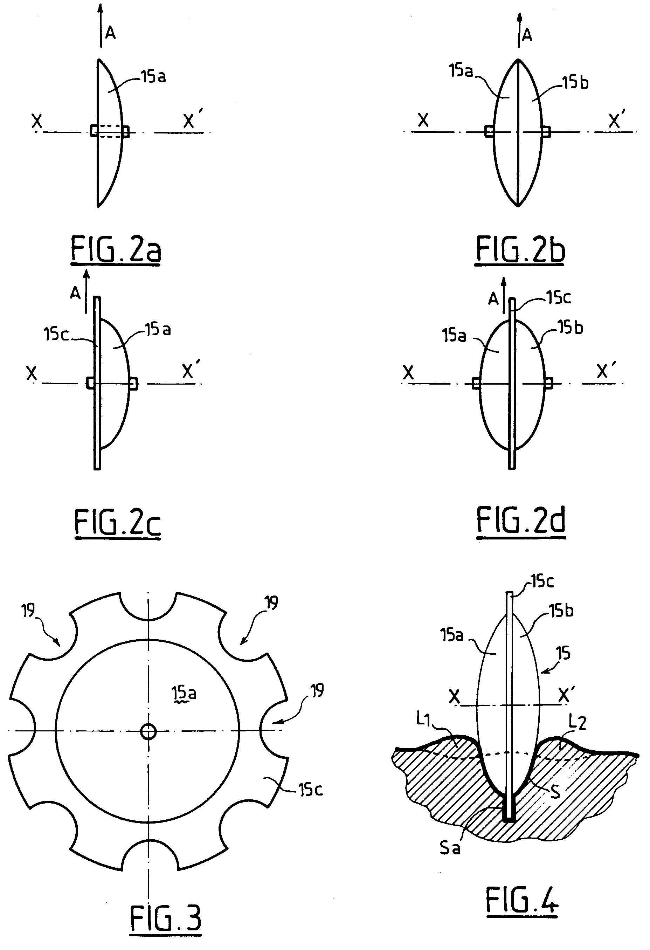

Les Figs. 2a à 2d représentent des disques 15 d'ouverture d'un sillon selon l'invention.

Selon un premier mode (Fig. 2a), le disque 15 est constitué d'un simple disque bombé 15a dont l'axe de rotation xx' est horizontal et à angle droit par rapport à la direction d'avancement (flèche A) du dispositif en fonctionnement.

Selon un second mode, il est constitué de deux disques bombés 15a et 15b dont les faces concaves sont respectivement tournées l'une vers l'autre (Fig. 2b).

Selon un troisième mode, il est constitué d'un seul disque bombé 15a dont la face concave est tournée vers un disque plat 15c et qui est en contact avec celui-ci (Fig. 2c).

Selon un quatrième mode, il est constitué de deux disques bombés 15a et 15b entre lesquels est monté un disque plat 15c. Les disques bombés 15a et 15b ont leurs faces concaves tournées l'une vers l'autre et enserrent le disque plat 15c.

Dans ces modes de réalisation, l'axe de rotation xx' du disque 15 est horizontal et à angle droit par rapport à la direction d'avancement A du dispositif d'enfouissage.

On décrit maintenant le fonctionnement d'un dispositif d'enfouissage pourvu d'un disque 15 qui est constitué selon le quatrième mode de réalisation (Fig. 2d). A l'exception de quelques points particuliers, ce fonctionnement est le même pour les autres modes de réalisation.

Au moyen du ou des vérins du système de fixation du type trois points à l'arrière de la tonne qui contient le liquide à enfouir, on exerce une force verticale de poussée F sur la poutre 1, force qui est transmise, via le système de rappel 16, au disque 15 de manière que celui-ci pénètre dans le sol, sur une profondeur désirée. La forme bombée du disque 15 facilite cette pénétration.

Etant donné la forme de disque (15), la profondeur et la largeur du sillon sont une fonction croissante de l'intensité de la force F.

En pénétrant dans le sol, le disque 15 crée un sillon S (Fig. 4) pourvu, de chaque côté, de deux lèvres L1 et L2. Dans ce sillon S, est injecté, en quantité prédéterminée, au moyen du tuyau d'injection 18, le liquide à enfouir. Les roues de rebouchage 11 et 12 ont une position telle qu'elles repoussent ensuite, par ripage, les lèvres L1 et L2 vers l'intérieur du sillon S et le rebouche après injection.

Du fait de la forme particulière du disque 15, la résistance à l'avancement de chaque dispositif d'enfouissage est modérée. D'une part, cela entraîne qu'une puissance de traction modérée peut suffire pour le véhicule qui porte la tonne et l'enfouisseur. D'autre part, du fait que l'on exerce une force verticale descendante sur chaque dispositif d'enfouissage, par réaction, l'arrière de la tonne à tendance à se soulever, reportant ainsi sa charge sur son attelage et donc sur les roues arrière du véhicule porteur. L'adhérence au sol de celui-ci est donc accrue.

Par ailleurs, chaque dispositif d'enfouissage a un encombrement transversal minimisé, et il est possible, sur un enfouisseur, de rapprocher deux dispositifs voisins afin que la distance qui les sépare soit sensiblement égale à une distance idéale pour les plantes.

Si un obstacle, tel qu'une pierre ou une racine, se présente sur le trajet du disque 15, le bras 5 se soulève, le disque 15 passe au-dessus et, rappelé par le système de rappel 16, revient dans sa position initiale. Les bras 9 et 10 et leurs systèmes de rappel 13 et 14 jouent le même rôle pour les roues de rebouchage 11 et 12. Les deux bras 9 et 10 étant indépendants, chaque dispositif peut épouser les inégalités du sol.

A cet égard, un dispositif d'enfouissage selon l'invention présente un avantage certain par rapport à ceux de l'art antérieur. En effet, un obstacle n'est plus le siège de casse de pièces que les utilisateurs des enfouisseurs de l'art antérieur étaient obligés de changer pour continuer à travailler.

On notera que les pouvoirs de pénétration des disques 15 selon les quatre modes décrits ci-dessus sont croissants en partant du mode de la Fig. 2a jusqu'au mode de la Fig. 2d.

Dans les modes de réalisation des Figs. 2c et 2d, la fonction du disque plat 15c est de tailler une saignée Sa dans le sol, avec la partie la plus en avant du disque 15 (zone hachurée H à la Fig. 1), alors que le disque bombé 15a ou les disques 15a et 15b ouvrent cette saignée pour former le sillon avec une lèvre ou deux lèvres L1, L2. On notera qu'une seule roue de rebouchage 12 peut être suffisante dans les modes de réalisation des Figs. 2a et 2c.

On notera que le disque plat 15c, bien que ne créant qu'un sillon Sa de faible volume, contribue à une augmentation notable de la surface d'échange, surface qui correspond à la surface totale de la saignée S et du sillon Sa.

On a également représenté, à la Fig. 4, en pointillés, le profil du sillon une fois rebouché par les roues de rebouchage 11 et 12.

Dans les deux derniers modes de réalisation, on pourra utiliser des disques plats 15c présentant des échancrures 19, ceci afin de faciliter encore la pénétration du disque 15 dans le sol, en particulier sur des sols non travaillés.

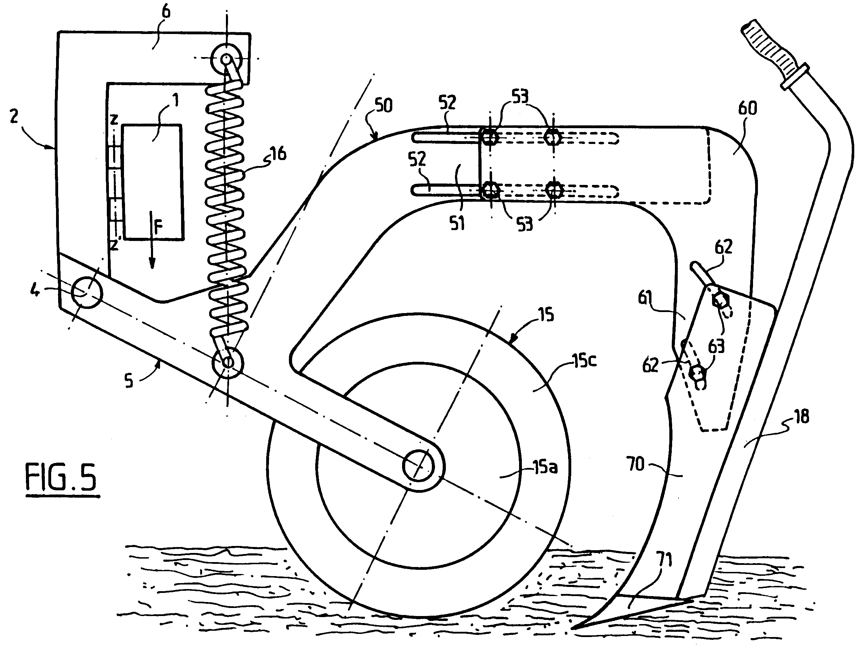

On a représenté à la Fig. 5 un autre mode de réalisation d'un dispositif d'enfouissage selon l'invention, Sur cette Fig., les mêmes éléments que ceux de la Fig. 1 portent les mêmes références.

Ainsi, le dispositif représenté est porté par une poutre transversale 1 dont le système de fixation à la tonne est prévu pour exercer une force verticale descendante (flèche F) sur la poutre 1.

Un châssis 2 est monté sur la poutre 1 de manière à pouvoir pivoter autour d'un axe zz' vertical d'un angle d'environ plus ou moins dix degrés autour de l'axe longitudinal de l'enfouisseur. Des butées (non représentées) peuvent être prévues pour limiter ce mouvement de pivotement.

Un bras 5 est prévu pour pivoter autour d'un axe de pivotement 4. A l'extrémité libre du bras 5, est monté un disque 15 dont la structure est une de celles qui sont représentées aux Figs.2a à 2d. On a cependant constaté que la structure de la Fig. 2d, avec un disque plat 15c enserré entre deux disques bombés 15a et 15b, donne de meilleurs résultats.

Un ressort de rappel de compression 16 est prévu entre l'aile verticale supérieure 6 du châssis 2 et le bras 5.

Le bras 5 est pourvu d'une aile 50 prolongée vers l'arrière par une partie horizontale 51. Cette dernière est pourvue de deux trous oblongs 52 parallèles entre eux et dirigés horizontalement vers l'arrière. Les trous 52 sont destinés à recevoir des boulons 53 prévus pour la fixation d'une équerre 60.

Cette dernière a sa partie arrière 61 qui est verticale et dirigée vers le sol et qui comporte des trous oblongs 62 sensiblement verticaux percés en arc de cercle. Les trous 62 sont destinés à recevoir des boulons 63 prévus pour la fixation d'un pied 70. A l'arrière du pied 70, accolé à celui-ci, est monté le tuyau d'injection 18 dont la sortie est sensiblement au niveau de la partie inférieure du pied 70.

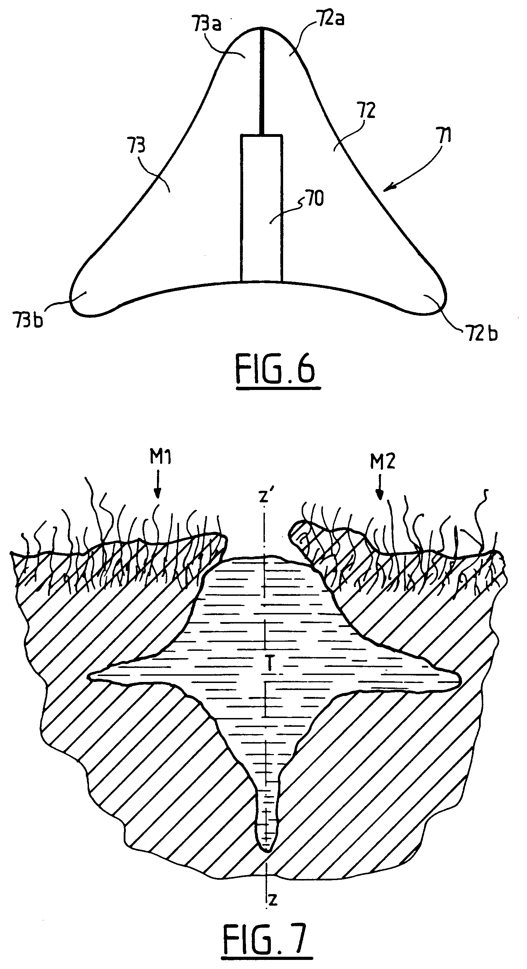

Dans la partie inférieure du pied 70, est soudé un soc 71 en forme de patte d'oie. Ce dernier est représenté vu de dessus à la Fig. 6. Il comporte deux ailes 72 et 73 en forme de triangle. Les parties avant 72a et 73a des ailes 72 et 73 forment la partie avant du soc 71 et se trouvent à un niveau inférieur à celui des parties arrière 72b et 73b. Ces dernières se trouvent sensiblement au niveau de la partie inférieure du pied 70.

Comme on peut le constater, l'ensemble pied 70 et soc 71 peut être avancé ou reculé sensiblement horizontalement par rapport au disque 15, ceci en faisant coulisser horizontalement l'équerre 60 par rapport à l'aile 50 du bras 5. Cela est rendu possible grâce aux trous oblongs 52.

De même, le pied 70 et le soc 71 peuvent être abaissés ou relevés par rapport au disque 15, ceci au moyen des trous oblongs 62. Du fait que les trous 62 ont une forme en arc de cercle, l'ensemble pied 70 et soc 71 pivote légèrement, en même temps que ce mouvement de réglage vertical, selon un axe horizontal transversal situé devant le pied 70.

On remarquera que le pied 70 et l'axe de symétrie du soc 71 se trouvent dans le même plan que celui qui contient le disque 15.

Le fonctionnement de l'enfouisseur de la Fig. 5 est le suivant.

La partie non-bombée 15c du disque 15 ouvre, par repoussement de la terre, un sillon de faible largeur, de l'ordre de quelques millimètres, et découpe, en quelque sorte, la partie supérieure du sol, partie qui peut être en herbe. Les parties bombées 15a et 15b du disque 15 élargissent le sillon ainsi formé.

Le soc 71 qui, en fonctionnement, se trouve à une profondeur de l'ordre de dix à vingt centimètres, ouvre une tranchée T (Fig. 7) qui est souterraine. De par sa forme de patte d'oie, le soc 71 soulève les mottes d'herbe M1 et M2 qui se trouvent de chaque côté de l'axe zz' du sillon ouvert par le disque 15, ce qui a pour efffet d'ouvrir la partie supérieure de la tranchée T. Le lisier est alors déversé dans la tranchée au moyen du tuyau d'injection 18. Après passage du tuyau 18, les mottes d'herbe, n'étant plus supportées par le soc 71, retombent dans leur position initiale et ferment la tranchée T. On peut comprendre que ce processus laisse le terrain sans pratiquement aucune trace de l'enfouissement.

Le soc 71 a une largeur de l'ordre de 20 à 30 centimètres. Il assure donc également, au niveau de la tranchée T, un décompactage de la terre ce qui facilite la diffusion du lisier et autorise une homogénéisation de l'enfouissement sur la prairie. De ce fait, les plantes reçoivent toutes une alimentation régulière en fertilisants, ce qui supprime les inconvénients de la croissance dite en vague généralement observée dans le cas d'utilisation des enfouisseurs de l'art antérieur.

On notera que l'enfouisseur de la Fig. 5 peut être utilisé sur tout type de terrains: terrains recouverts de chaumes ou d'éteules, prairies naturelles ou artificielles, etc. Selon le type de terrain d'enfouissement, on réglera la position relative du pied 70 et du soc 71 par rapport au disque 15.

Le fait que le châssis 2 qui porte le bras 5 soit monté pivotant sur la poutre 1, permet au disque 15 et au soc 71 d'éviter les obstacles, tels que des pierres, des racines, etc. et évite l'endommagement de ces outils.

## Revendications

1. Enfouisseur de produits liquides comportant une pluralité de dispositifs d'enfouissage montés côte à côte sur une même poutre attelée à un système de fixation d'un véhicule ou d'une tonne contenant le liquide à enfouir, chaque dispositif comportant, monté sur un même châssis, des moyens de formation d'un sillon à la surface du sol, des moyens pour injecter le liquide à enfouir dans le sillon ouvert par lesdits moyens de formation et des moyens de rebouchage dudit sillon, lesdits moyens de formation étant constitués d'un disque (15), ledit disque (15) étant dans un plan sensiblement vertical avec son axe de rotation sensiblement horizontal et perpendiculaire à la direction d'avancement dudit dispositif, ledit système de fixation étant prévu pour pouvoir exercer une force d'appui verticale descendante sur le disque (15) de chacun desdits dispositifs et en ce que lesdits moyens de rebouchage sont constitués d'un pied sensiblement vertical (70) dans le même plan que celui qui contient le disque (15) et à l'extrémité inférieure duquel est monté un soc (71) destiné à se trouver dans le sol lors du fonctionnement de l'enfouisseur, lesdits moyens pour injeter étant constitués d'un tuyau d'injection (18) se trouvant accolé derrière ledit pied (70) et ayant sa sortie sensiblement au niveau supérieur du soc (71), caractérisé en ce que ledit disque (15) présente au moins une face bombée pour élargir ledit sillon.

2. Enfouisseur selon la revendication 1, caractérisé en ce que l'ensemble pied (70) et soc (71) est monté de manière à pouvoir coulisser d'avant en arrière par rapport au disque (15).

3. Enfouisseur selon la revendication 1 ou 2, caractérisé en ce que l'ensemble pied (70) et soc (71) est monté de manière à pouvoir coulisser sensiblement verticalement en effectuant un mouvement de pivotement selon un axe horizontal et transversal situé devant ledit pied (70).

4. Enfouisseur selon la revendication 1, 2 ou 3, caractérisé en ce que ledit disque (15) est constitué d'un disque bombé (15a).

5. Enfouisseur selon la revendication 1, 2 ou 3, caractérisé en ce que ledit disque (15) est constitué de deux disques bombés (15a et 15b) dont les faces concaves sont respectivement tournées l'une vers l'autre.

6. Enfouisseur selon la revendication 1, 2 ou 3, caractérisé en ce que ledit disque (15) est constitué d'un seul disque bombé (15a) à sa face concave tournée vers un disque plat 15c et en contact avec celui-ci.

7. Enfouisseur selon la revendication 1, 2 ou 3, caractérisé en ce que ledit disque (15) est constitué de deux disques bombés (15a et 15b) entre lesquels est monté un disque plat (15c), les disques bombés (15a et 15b) ayant leurs faces concaves tournées l'une vers l'autre et enserrant le disque plat (15c).

8. Enfouisseur selon une des revendications 1 à 7, caractérisé en ce que ledit disque (15) de chaque dispositif d'enfouissage est monté sur un bras (5) pivotant selon un axe horizontal et rappelé par un système de rappel (16, 17).

## Claims

1. Fertilizer attachment for liquid products comprising a plurality of ploughing-in devices mounted side by side on the same beam which is coupled to a fixing system of a vehicle or of a drum containing the liquid to be ploughed in, each device comprising means, mounted on the same frame, for forming a furrow in the surface of the ground, for injecting the liquid to be ploughed in into the furrow opened up by said means for forming the furrow, and for filling in said furrow, said means for forming the furrow consisting of a disk (15), said disk (15) being on a roughly vertical plane with its axis of rotation roughly horizontal and perpendicular to the direction of travel of said device, said fixing system being provided so as to be able to exert a downward vertical bearing force on the disk (15) of each of said devices and said means for filling in the furrow consisting of a roughly vertical foot (70) on the same plane as that which contains the disk (15) and at the lower end of which a ploughshare (71) is mounted which is designed to be in the ground during operation of the fertilizer attachment, said injection means consisting of an injection pipe (18) being attached behind said foot (70) and having its outlet roughly level with the top of the ploughshare (71), characterized in that said disk (15) has at least one curved face for widening said furrow.

2. Fertilizer attachment according to Claim 1, characterized in that the foot (70) and ploughshare (71) assembly is mounted so as to be able to slide from the front to the rear in relation to the disk (15).

3. Fertilizer attachment according to Claim 1 or 2, characterized in that the foot (70) and ploughshare (71) assembly is mounted so as to be able to slide roughly vertically by making a pivoting movement according to a horizontal and transversal axis located in front of said foot (70).

4. Fertilizer attachment according to Claim 1, 2 or 3, characterized in that said disk (15) consists of one curved disk (15a).

5. Fertilizer attachment according to Claim 1, 2 or 3, characterized in that said disk (15) consists of two curved disks (15a and 15b), the concave faces of which are respectively turned towards each other.

6. Fertilizer attachment according to Claim 1, 2 or 3, characterized in that said disk (15) consists of a single curved disk (15a) with its concave face turned towards a flat disk 15c and in contact with this.

7. Fertilizer attachment according to Claim 1, 2 or 3, characterized in that said disk (15) consists of two curved disks (15a and 15b) with a flat disk (15c) fitted between them, the curved disks (15a and 15b) having their concave faces turned towards one another and enclosing the flat disk (15c).

8. Fertilizer attachment according to one of Claims 1 to 7, characterized in that said disk (15) of each ploughing-in device is mounted on an arm (5) pivoting according to a horizontal axis and returned by a return system (16, 17).

## Patentansprüche

1. Flüssigdüngereinbringer mit einer Vielzahl von Einbringer-Vorrichtungen, die nebeneinander auf einem gemeinsamen Träger montiert sind, der an einem Befestigungssystem eines die einzubringende Flüssigkeit enthaltenden Fahrzeuges oder einer Tonne aufgehängt ist, wobei jede Vorrichtung auf einem gemeinsamen Chassis montierte Mittel zur Bildung einer Furche an der Erdoberfläche aufweist, ferner mit Mitteln zum Einspritzen der einzubringenden Flüssigkeit in die durch die Bildungsmittel geöffnete Furche und mit Mitteln zum Schließen der Furche, wobei die Bildungsmittel durch eine Scheibe (15) gebildet sind und die Scheibe (15) in einer im wesentlichen vertikalen Ebene liegt, mit ihrer Drehachse im wesentlichen horizontal und senkrecht zu der Bewegungsrichtung der Vorrichtung, und wobei das Befestigungssystem eine Kraft vertikal nach unten auf die Scheibe (15) jeder der Vorrichtungen ausüben kann und die Mittel zum Schließen durch einen im wesentlichen vertikalen Fuß (70) gebildet sind, der in derselben Ebene liegt wie derjenigen, die die Scheibe (15) enthält, und an dessem unteren Ende eine Pflugschar (71) befestigt ist, die sich mit Beginn der Funktion des Einbringers in dem Erdboden befindet, und wobei die Mittel zum Einspritzen durch eine Einspritzröhre (18) gebildet sind, die hinter dem Fuß (70) aufgehängt ist und deren Ausgang etwa in einer Höhe oberhalb der Pflugschar (71) liegt, **dadurch gekennzeichnet**, daß die Scheibe (15) wenigstens eine gewölbte Oberfläche darstellt, um die Furche zu erweitern.

2. Einbringer nach Anspruch 1, **dadurch gekennzeichnet**, daß die Anordnung aus dem Fuß (70) und der Pflugschar (71) derart montiert ist, daß sie relativ zu der Scheibe (15) nach vorn und nach hinten gleiten kann.

3. Einbringer nach Anspruch 1 oder 2, **dadurch gekennzeichnet**, daß die Anordnung aus dem Fuß (70) und der Pflugschar (71) derart montiert ist, daß sie im wesentlichen vertikal gleiten kann und dadurch eine Schwenkbewegung um eine vor dem Fuß (70) liegende, horizontal und quer gerichtete Achse bewirkt.

4. Einbringer nach Anspruch 1, 2 oder 3, **dadurch gekennzeichnet**, daß die Scheibe (15) durch eine mit Wölbungen versehene Scheibe (15a) gebildet ist.

5. Einbringer nach Anspruch 1, 2 oder 3, **dadurch gekennzeichnet**, daß die Scheibe (15) durch zwei mit Wölbungen versehene Scheiben (15a und 15b) gebildet ist, deren konkave Oberflächen jeweils entgegengesetzt zueinander gerichtet sind.

6. Einbringer nach Anspruch 1, 2 oder 3, **dadurch gekennzeichnet**, daß die Scheibe (15) durch eine einzige mit Wölbungen versehene Scheibe (15a) gebildet ist, die mit ihrer konkaven Oberfläche einer flachen Scheibe (15c) gegenüber liegt und mit dieser in Berührung steht.

7. Einbringer nach Anspruch 1, 2 oder 3, **dadurch gekennzeichnet**, daß die Scheibe (15) durch zwei mit Wölbungen versehene Scheiben (15a und 15b) gebildet ist, zwischen denen eine flache Scheibe (15c) montiert ist, und daß die konkaven Oberflächen der mit Wölbungen versehenen Scheiben (15a und 15b) entgegengesetzt zueinander gerichtet sind und die flache Scheibe (15c) einschließen.

8. Einbringer nach einem der Ansprüche 1 bis 7, **dadurch gekennzeichnet**, daß die Scheibe (15) jeder Einbringer-Vorrichtung auf einem Arm (5) gelagert ist, der um eine horizontale Achse schwenkt und durch ein Rückhaltesystem (16, 17) aufgehängt ist.
